Europäisches Patentamt

**European Patent Office**

Office européen des brevets

(19)

(11) Numéro de publication:

**0 059 121**
**A1**

(12)

# DEMANDE DE BREVET EUROPEEN

(21) Numéro de dépôt: 82400154.9

(51) Int. Cl.³: **G 06 F 15/20**

(22) Date de dépôt: 28.01.82

(30) Priorité: 12.02.81 FR 8102747

(71) Demandeur: **REGIE NATIONALE DES USINES RENAULT, Boite postale 103 8-10 avenue Emile Zola, F-92109 Boulogne-Billancourt (FR)**

(43) Date de publication de la demande: 01.09.82
**Bulletin 82/35**

(72) Inventeur: **Hermann, Jean-Paul, 24, rue du Village, F-91300 Massy (FR)**

(74) Mandataire: **Srour, Elie et al, REGIE NATIONALE DES USINES RENAULT (S. 0804) 8 & 10 Avenue Emile Zola, F-92109 Boulogne Billancourt (FR)**

(84) Etats contractants désignés: **DE GB IT SE**

(54) Dispositif et procédé de localisation d'objets tridimensionnels en vrac pour la commande d'un terminal de préhension.

(57) Appareil de localisation d'objets tridimensionnels en vrac pour la commande d'un terminal de préhension et du type comportant au moins un système optique de projection 9 associé à des moyens d'entraînement 27 commandés par une interface connectée à une unité centrale 15 un capteur de lumière telle une caméra TV 11 disposée à l'aplomb de la surface, par exemple horizontale recevant le vrac et reliée à des moyens d'analyse et de traitement de ladite unité, caractérisé en ce que le système optique 9 délivre un faisceau lumineux sensiblement plan 5 qui balaye la surface du vrac grâce aux moyens d'entraînement qui font varier l'angle θ que fait le faisceau avec la surface précitée et dont la valeur mesurée par un codeur 29 est transmise à l'unité centrale qui analyse l'image de la trace du faisceau captée par la caméra et dont les moyens de traitement sélectionnent le ou les points dont la cote répond à une condition préétablie.

Application: Déchargement automatique à cadence élevée au moyen d'un robot industriel d'une caisse remplie d'objets tridimensionnels en vrac.

Dispositif et procédé de localisation d'objets tridimensionnels en vrac pour la commande d'un terminal de préhension.

La présente invention est relative à un dispositif ainsi qu'à un procédé de localisation d'objets tridimensionnels en vrac pour la commande d'un terminal de préhension.

L'alimentation automatique à cadence élevée d'une chaîne de montage en pièces tridimensionnelles qui sont successivement prélevées par un robot dans un conteneur dans lequel elles se présentent en vrac et enchevétrées se heurte à la difficulté qu'éprouve le robot de reconnaître et de saisir une à une avec un taux de réussite élevé lesdites pièces en vrac.

Les solutions qui ont été déjà proposées mettent en oeuvre des dispositifs complexes faisant généralement appel à des moyens de calcul puissants.

C'est ainsi qu'il a été suggéré d'effectuer un relevé topologique des zones proéminentes à la surface d'un vrac par des méthodes d'analyse de vues stéréoscopiques ou par la projection d'une grille lumineuse dont on analyse la trace par un procédé également stéréoscopique pour restituer le relief de la surface du vrac.

Ces méthodes présentent toutefois l'inconvénient de nécessiter des calculs complexes et un matériel difficile à mettre en oeuvre en milieu industriel.

L'invention a donc pour but de remédier aux inconvénients précités en proposant notamment un dispositif permettant le traitement des données en temps réel au moyen d'une instrumentation maintenant classique, d'algorithmes simples et d'exécution rapide,ainsi que par l'utilisation d'un matériel adapté à un usage industriel.

Le dispositif de localisation d'objets tridimensionnels en vrac pour la commande d'un terminal de préhension comporte au moins un système optique de projection associé à des moyens d'entrainement commandés par une interface connectée à une unité centrale, un capteur de lumière telle une caméra TV disposée à l'aplomb de la surface, par exemple horizontale recevant le vrac, et reliée à des moyens d'analyse et de traitement de ladite unité, étant caractérisé en ce que le système optique délivre un faisceau lumineux sensiblement plan qui balaye la surface du vrac grâce aux moyens d'entrainement qui font varier l'angle $\theta$ que fait le faisceau avec la surface précitée et dont la valeur, mesurée par un codeur, est transmise à l'unité centrale qui analyse l'image de la trace du faisceau captée par la caméra et dont les moyens de traitement sélectionnent le ou les points dont la cote répond à une condition préétablie.

Selon une première caractéristique de l'invention, le balayage de la caméra s'effectue perpendiculairement à l'axe de rotation du système de projection et les moyens d'analyse notent pour chaque ligne de balayage xi l'ordonnée yi par rapport à un référentiel plan notamment horizontal, de son intersection avec l'image de la trace du faisceau, et cela pour chaque valeur Selon une variante de l'invention, le balayage de la caméra s'effectue parallèlement à l'axe de rotation du système de projection et les moyens d'analyse notent pour chaque valeur $\theta_i$ l'ordonnée yi de la première ligne de balayage éclairée et l'abscisse xi du premier point éclairé de l'image de la trace, et cela par rapport à un référentiel plan notamment horizontal.

Selon une troisième caractéristique de l'invention, les moyens de traitement calculent à partir des valeurs $\theta_i$ transmises par le codeur angulaire, la cote (zi) des points (xi, yi).

L'invention concerne également un procédé de localisation d'objets tridimensionnels en vrac pour la commande d'un terminal de préhension à l'aide d'un équipement comprenant au moins un système optique relié à des moyens d'entrainement commandés par une interface connectée à une unité centrale, un capteur de lumière telle une caméra de télévision disposée à l'aplomb de la surface, par exemple horizontale recevant le vrac reliée à des moyens d'analyse et de traitement de l'unité centrale ledit procédé étant caractérisé en ce qu'il consiste à faire délivrer par le système optique un faisceau lumineux plan faisant un angle $\theta$ avec ladite surface, à entraîner en rotation ledit système de manière à faire balayer au faisceau la surface du vrac, à analyser la trace lumineuse du faisceau captée par la caméra, à sélectionner par les moyens de traitement le ou les points du vrac dont la cote répond à une condition préétablie.

Selon une autre caractéristique, le procédé selon l'invention consiste à élaborer, par rapport à un référentiel, les coordonnées cartésiennes $(x_i y_i z_i)$ des points de la surface du vrac à partir des valeurs angulaires $\theta_i$ et des coordonnées (xi, yi) des points intersection avec les lignes de balayage de l'image de la trace lumineuse captée par la caméra.

Selon une variante le procédé selon l'invention consiste à élaborer, par rapport à un référentiel, les coordonnées cartésiennes (xi, yi, zi) des points de la surface du vrac à partir des valeurs angulaires $\theta_i$ des coordonnées (xi, yi) des points intersection de la ligne de balayage et du premier point éclairé de l'image de la trace lumineuse captée par la caméra.

D'autres caractéristiques et avantages de la présente invention apparaîtront à la suite de la description qui va suivre du procédé et de deux modes d'exécution du dispositif en faisant application, donnés uniquement à titre d'exemples et représentés aux dessins annexés dans lesquels :

La figure 1 représente un schéma de principe de la présente invention,

la figure 2 représente un dispositif de localisation suivant l'invention,

la figure 3 représente une variante de l'invention,

la figure 4 représente un organigramme du cycle d'étalonnage du dispositif,

la figure 5 représente un organigramme du cycle opération du dispositif de la figure 2,

la figure 6 représente un organigramme du cycle opération de la variante de la figure 3,

la figure 7 représente un mode d'exécution du système optique utilisé.

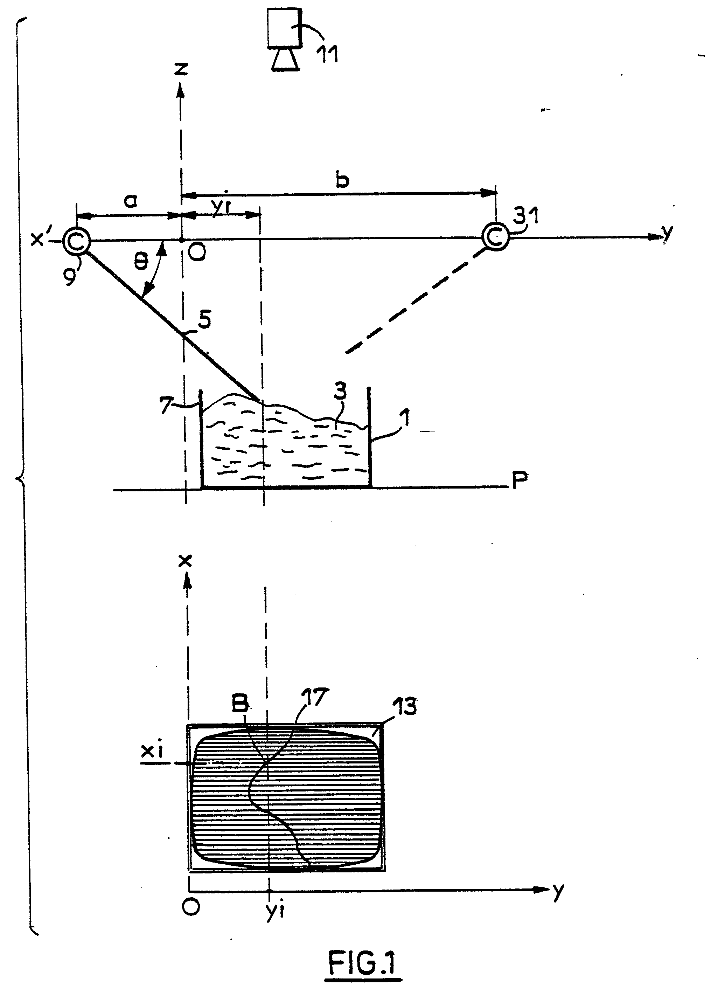

La figure 1 représente le schéma de principe du procédé objet de la présente invention selon lequel une caisse 1 contenant des pièces tridimensionnelles en vrac 3 destinées à être saisies par le terminal de préhension d'un robot est disposée sur un plan par exemple horizontal de trace $P$ , de manière à être balayée par un faisceau lumineux sensiblement plan 5 de largeur suffisante pour couvrir le côté adjacent 7 du vrac lequel faisceau est délivré par un système optique de projection 9 placé au dessus et à une certaine distance à gauche de ladite caisse le long d'un axe longitudinal x' orienté pour plus de simplicité parallèlement au côté 7 et lié à un référentiel tridimensionnel orthogonal d'axe horizontal, y parallèle à la trace $P$ et d'axe vertical z dirigé vers le haut.

A l'aplomb du centre du vrac est montée une caméra de télévision fixe 11, à une hauteur telle que son champ couvre la surface complète du vrac et de manière à ce que la prise de vue ne soit pas affectée par les effets de parallaxe, ladite caméra étant connectée d'une part à un moniteur TV 13 et d'autre part à une unité centrale 15 comportant notamment des moyens d'analyse et de traitement.

Le faisceau plan défini plus haut fait avec le plan horizontal x'y un angle $\theta$ rendu variable par rotation du système de projection autour de son axe x' , et dont la trace sur le vrac est une courbe non droite du fait que la surface du vrac n'est pas plane et dont l'image captée par la caméra de télévision se présente sur l'écran du moniteur sous la forme d'une courbe 17 non droite continue ou non qu'on analyse dans le plan horizontal x'y par exemple, de la manière suivante :

Si le balayage ligne se fait selon la direction y, on note pour chacune des lignes de balayage xi l'ordonnée yi par rapport à un référentiel plan x y du point B intersection de cette ligne et du bord sombre-clair de l'image de la trace, dont les coordonnées par rapport à o xyz sont (xi yi zi) où la cote zi est définie par la relation $zi = - (yi + a).tg\,\theta_j$. L'origine des ordonnées coïncide avec le bord du champ de la caméra TV et (-a) est l'ordonnée de la source lumineuse.

En faisant varier $\theta$ on peut enregistrer pour chaque valeur $\theta_j$ les coordonnées des points (xi yi zi), pour ne garder lors du traitement ultérieur dans l'ensemble de ces points que ceux pour lesquels les zi répondent à une condition préétablie et notamment ceux pour lesquels les zi sont situés entre deux cotes données H et H-h, H étant généralement la cote la plus élevée du vrac et h un paramètre, les points ainsi sélectionnés constituent alors l'image de la partie proéminente du vrac.

Le procédé selon l'invention permet de simplifier considérablement l'analyse de l'image en éliminant les objets situés dans des creux, qui sont généralement peu intéressants car de toutes façons inaccessibles au terminal de préhension du robot. Le procédé permet également de sélectionner les images des objets situés dans un volume donné, et donc, par exemple, de s'affranchir des images des objets en contrebas qui se comportent comme des parasites gênant le processus opératoire.

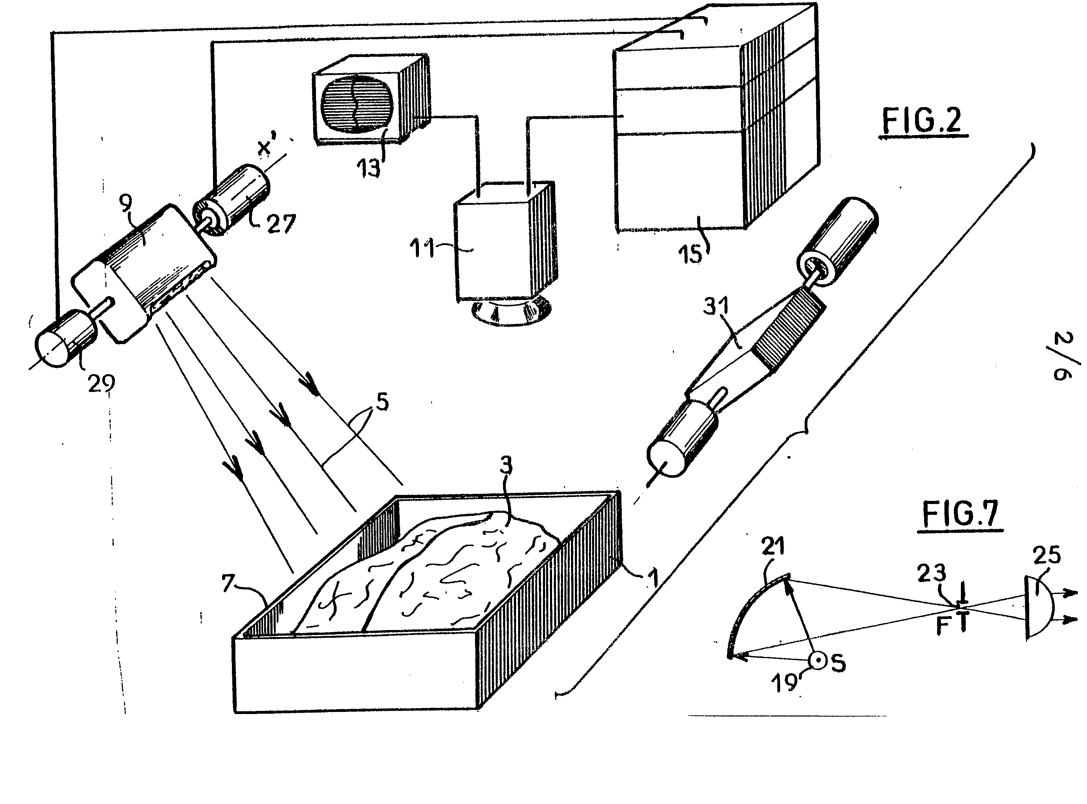

La figure 2 représente schématiquement un dispositif permettant de mettre en oeuvre le procédé selon l'invention, et sur laquelle on distingue la caisse 1 de pièces en vrac au dessus de laquelle est disposé un système optique de projection 9 comprenant une source lumineuse 19 constitué par exemple d'une lampe à incandescence à filament rectiligne disposée sensiblement au foyer S d'un miroir elliptique cylindrique 21, la lumière réfléchie traverse une fente rectiligne 23 également axiale située au deuxième foyer F dudit miroir 21 avant d'atteindre une lentille cylindrique 25 qui délivre un faisceau plan, de largeur au moins égale au côté 7 du vrac qu'il balaye, avec un éclairement nettement supérieur à celui dû à l'éclairage ambiant, grâce à un moteur

d'entraînement 27 du système de projection autour de l'axe x' , connecté ainsi qu'un codeur angulaire 29 à des moyens de commande (interface) reliés à l'unité centrale.

Si le vrac est contenu dans une caisse aux parois opaques, il est nécessaire d'utiliser un deuxième système optique 31 *ordonné b* /symétrique du premier par rapport à l'axe /. ^optique de la caméra; les deux systèmes éclairant à tour de rôle chacun une moitié de la surface du vrac ce qui permet de s'affranchir de l'ombre des bords de la caisse ; la cote $z_i$ est alors donnée par la relation $z_i = - (b - y_i). tg \theta_j$ en ce qui concerne le deuxième système qui comporte également son moteur d'entraînement et son codeur angulaire reliés tous deux à l'unité de commande et par conséquent à l'unité centrale.

Comme décrit précédemment la caméra de télévision fixe 11 est montée à l'aplomb du centre du vrac à une hauteur telle que son champ couvre la surface complète de ce dernier, laquelle caméra est reliée d'une part au moniteur TV 13 et d'autre part à l'unité centrale qui comprend notamment des circuits électroniques pour la synchronisation de la caméra TV, l'amplification et binarisation du signal vidéo, la validation des mesures en fonction de la commande moteur et le relevé des valeurs $x_i$, $y_i$ et $\theta_j$ ainsi que des moyens de traitement.

Les moyens de commande entraînent le ou les moteurs afin de faire tourner le faisceau entre $\theta_1$ et $\theta_N$ autour de l'axe de la source, avec une vitesse de rotation de l'ordre de 5°/ seconde de sorte que la durée de balayage soit celle de 250 images pour une excursion angulaire d'environ 30°, pour le cas où l'image du vrac est à l'intérieur d'un carré de 250 x 250 pixels.

Pour chaque valeur de $\theta_j \in (\theta_1, \theta_N)$ le dispositif enregistre les coordonnées planes $(x_i, y_i)$ et calcule la cote $z_i = - (y_i + a). tg \theta_j$ des points image de la trace du faisceau, l'élaboration des coordonnées cartésiennes $(x_i, y_i, z_i)$ est suivie d'une phase de traitement qui consiste à ne garder dans l'ensemble de ces points que ceux pour lesquels $z_i$ répond à une condition préétablie.

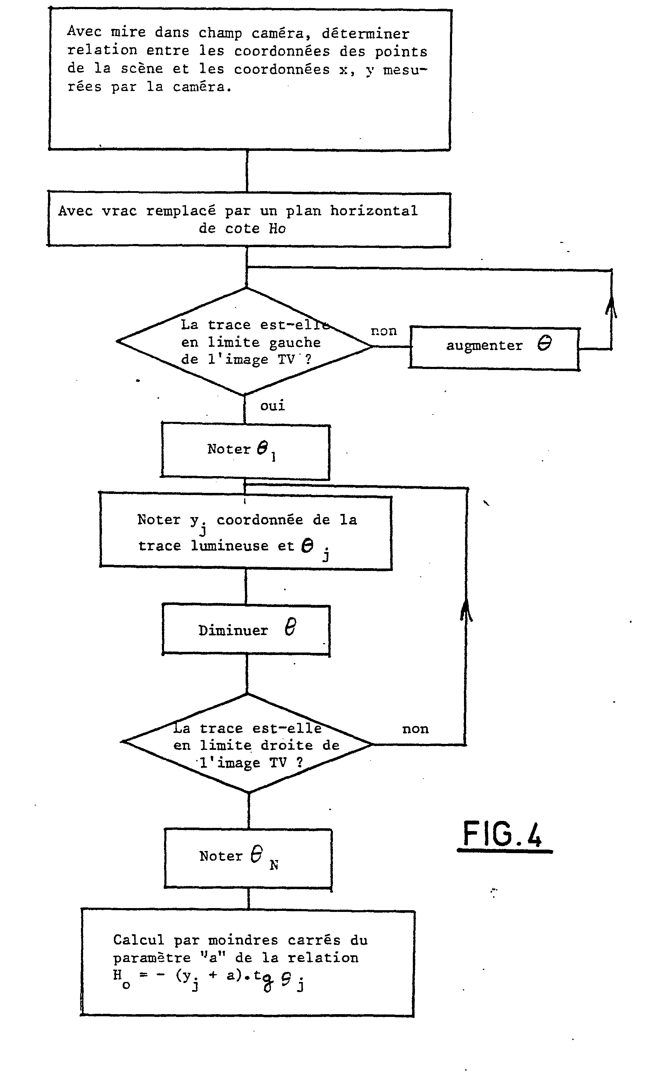

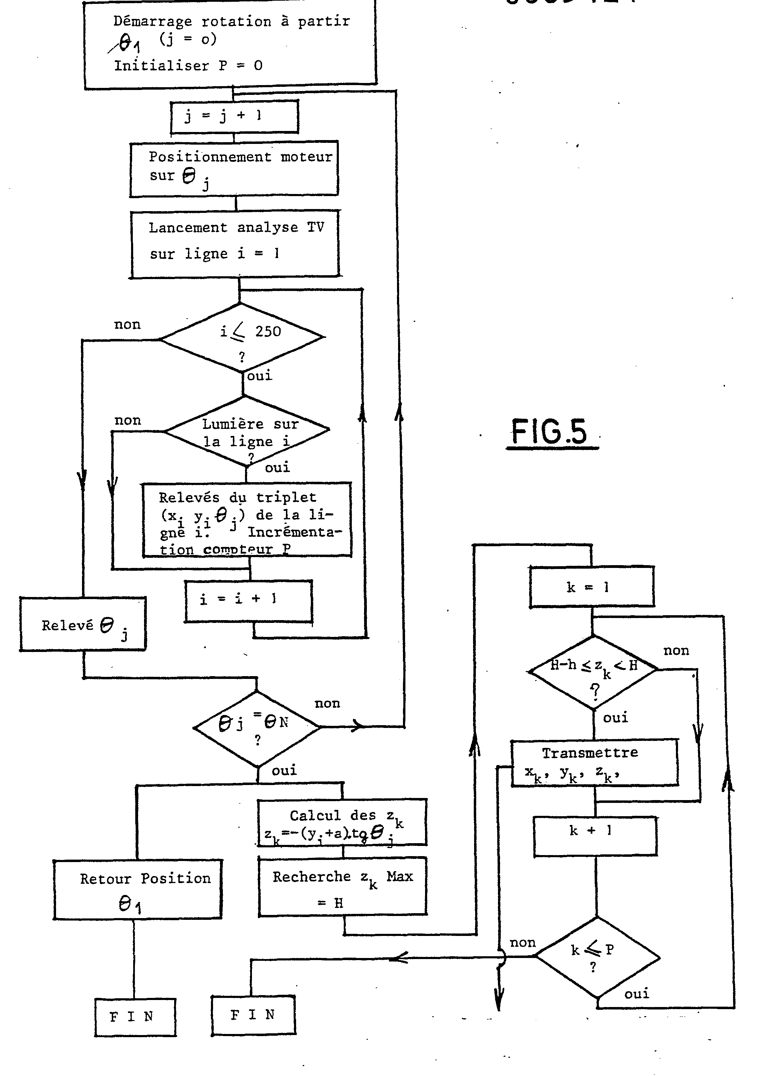

L'organigramme de la figure 4 représente l'opération d'étalonnage du dispositif grâce au calcul du paramètre "a" défini précédemment tandis que l'organigramme de la figure 5 décrit le cycle opératoire d'analyse de l'image et du traitement ultérieur afin de ne garder en mémoire que les points pour lesquels $z_i$ est situé entre deux cotes H et h.

Pour opérer l'étalonnage, on remplace le vrac par un plan horizontal de cote Ho, et après la détermination avec mire dans le champ de la caméra de la relation existant entre les coordonnées des points de la scène et les coordonnées xy mesurées par la caméra, on mesure et on note les valeurs $y_i$ pour les différentes positions angulaires $\theta_j$, de l'intervalle $(\theta_1, \theta_N)$ pour ensuite calculer la valeur moyenne de "a" à partir d'un ensemble d'équations $Ho = - (y_j + a).tg\,\theta_j$

Le cycle opératoire représenté sur la figure 5 démarre à partir de $\theta_1$ pour j = 0 suivi d'un ordre de commande du moteur du système de projection positionnant $\theta$ sur $\theta_j$ pour j = j + 1, à la suite de quoi est lancée l'analyse TV sur 250 lignes avec le relevé pour chaque ligne du triplet $(x_i, y_i, \theta_j)$ et ceci pour chaque valeur de $\theta$ comprise entre $\theta_1$ et $\theta_N$ ; l'unité de traitement calcule ensuite les $Z_k = - (y_i + a).tg\,\theta_j$ , recherche la cote du point le plus élevé du vrac $Z_{k\,max} = H$ pour ne retenir ensuite que les points dont la cote est située dans l'intervalle $H-h \leqslant Z_k < H$, h étant un paramètre. Sur cet organigramme, P désigne le nombre de triplets (xyz) et K la valeur courante de P.
Dans le cas où les hauteurs H et H-h sont connues à priori, cas d'un vrac semi-rangé, l'acquisition est simplifiée et se limite à la zone définie par $a - \dfrac{H}{tg\,\theta_j} \leqslant y \leqslant -a - \dfrac{(H-h)}{tg\,\theta_j}$ .

Ainsi on simplifie considérablement l'analyse de l'image en éliminant les objets situés dans des creux qui sont généralement peu intéressants car placés hors d'atteinte du terminal de préhension du robot.

L'analyse et le traitement de l'image définie précédemment effectués aux moyens de techniques classiques permettent de déterminer la localisation et l'orientation des pièces situées à la surface du vrac en vue de la commande du terminal de préhension d'un robot industriel destiné à venir les saisir, à une cadence élevée.

Le dispositif et le mode opératoire décrits ci-dessus permettent également la détermination des coordonnées xi, yi, zi du point le par rapport au référentiel ox yz par exemple plus élevé de toute la surface du vrac.

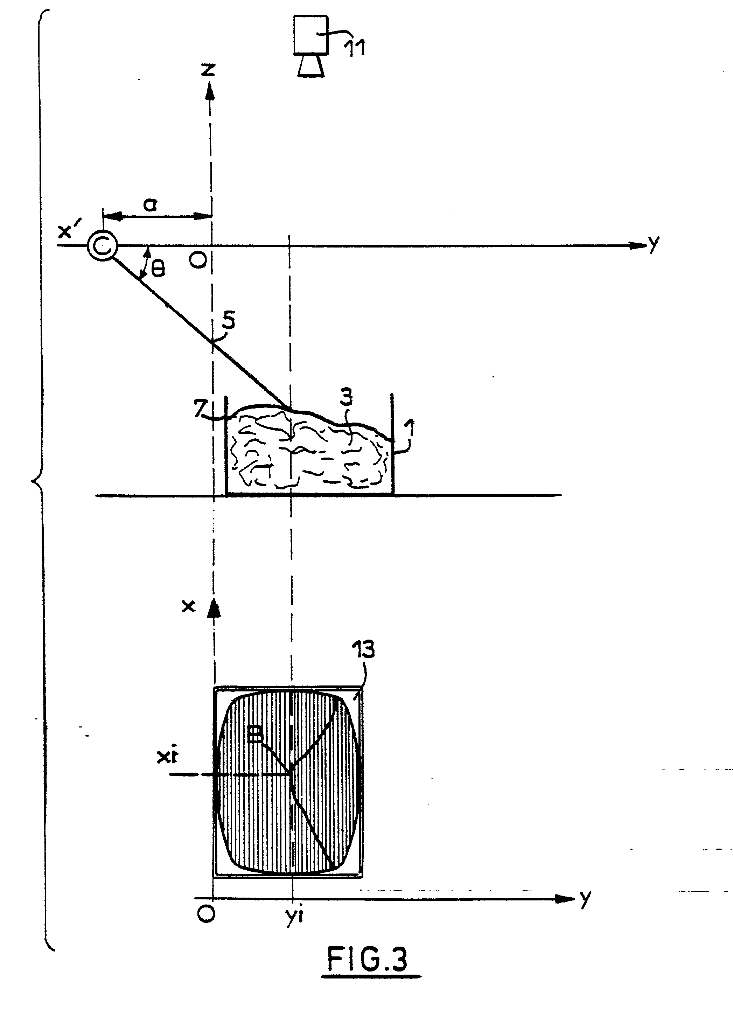

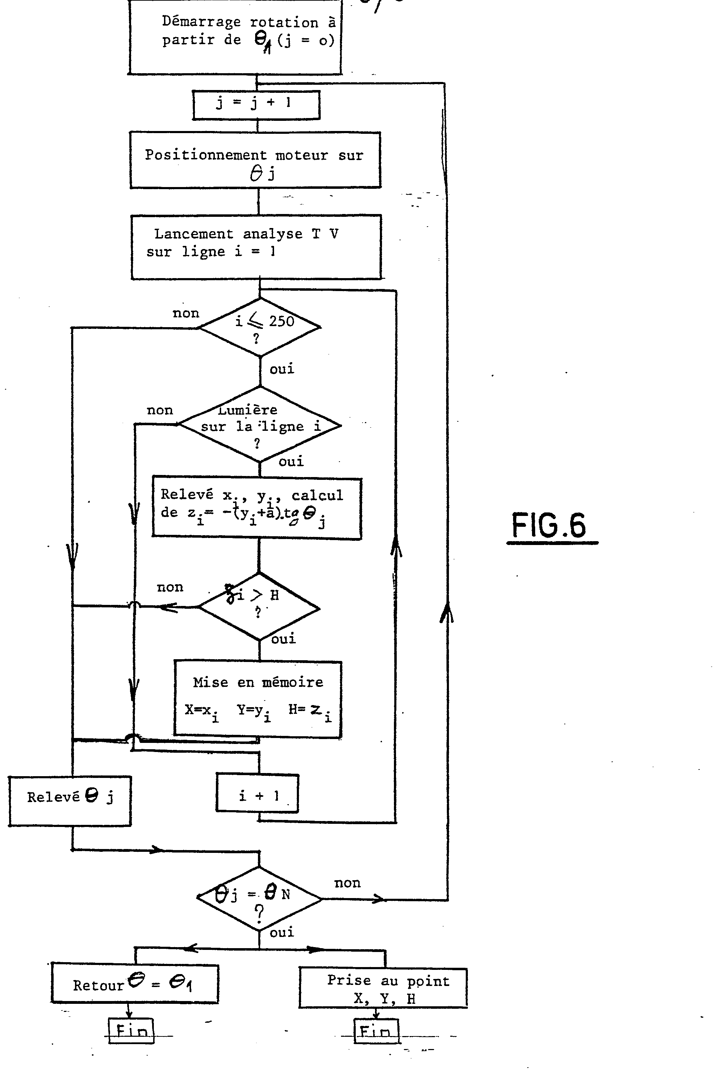

Toutefois cette détermination peut être simplifiée en adoptant la variante du dispositif représentée à la figure 3 dans laquelle la caméra est tournée de 90° de manière que les lignes de balayage soient parallèles à x. En effet soient yi l'ordonnée de la première ligne éclairée quand $\theta = \theta_j$ et xi l'abscisse du premier point éclairé ; le point de coordonnées (xi, yi) est le plus haut de tous ceux éclairés à ce moment-là et dont la cote calculée d'après la relation $z_i = - (y_i + a). tg \theta_j$ est comparée à la plus grande cote rencontrée précédemment au cours de ce balayage ; si elle lui est supérieure, le triplet (xi, yi, zi) est mis en mémoire et le triplet précédemment retenu est effacé, sinon on passe à la valeur suivante de $\theta$ selon le cycle opératoire défini par l'organigramme de la figure 6 qui en fin de traitement d'un balayage du faisceau entre $\theta_1$ et $\theta_N$ permet de garder en mémoire le seul triplet XYH correspondant aux trois coordonnées du point le plus élevé.

Cette variante présente l'intérêt de ne nécessiter qu'une mémoire de stockage très réduite et a pour but de localiser le point le plus élevé du vrac dans l'intention d'utiliser un terminal de préhension simple pour saisir la zone correspondante et notamment au moyen d'un électro-aimant, grappin ou ventouse.

Bien entendu, les moyens de mise en oeuvre du procédé n'ont été donnés qu'à titre d'exemple non limitatifs et peuvent être remplacés par des moyens équivalents c'est ainsi que le système optique décrit peut être remplacé par un rayon laser. Par ailleurs les cyles opératoires définis par les figures 4, 5 et 6, de lecture évidente pour l'homme de l'art n'ont pas été décrits dans les moindres détails mais font partie intégrante de la présente description. Enfin le calcul des xi yi zi peut être effectué par rapport à tout autre référentiel.

49398 1

REVENDICATIONS

1. Appareil de localisation d'objets tridimensionnels en vrac pour la commande d'un terminal de préhension et du type comportant au moins un système optique de projection délivrant un faisceau lumineux sensiblement plan et associé à des moyens d'entraînement commandés par une interface connectée à une unité centrale, un capteur de lumière telle une caméra TV disposée à l'aplomb de la surface, par exemple horizontale recevant le vrac et reliée à des moyens d'analyse et de traitement de ladite unité, caractérisé en ce que le faisceau lumineux balaye la surface du vrac grâce aux moyens d'entraînement qui font varier à l'intérieur d'un interval $(\theta_1, \theta_N)$ l'angle $\theta$ que fait le faisceau avec la surface précitée et dont la valeur, mesurée par un codeur, est transmise à l'unité centrale qui analyse pour chaque valeur de l'angle $\theta$ l'image de la trace du faisceau captée par la caméra et dont les moyens de traitement sélectionnent le ou les points dont la cote répond à une condition préétablie.

2. Appareil selon la revendication 1, caractérisé en ce que le balayage de la caméra s'effectue perpendiculairement à l'axe de rotation du système de projection et les moyens d'analyse notent pour chaque ligne de balayage xi l'ordonnée yi par rapport à un référentiel plan notamment horizontal, de son intersection avec l'image de la trace du faisceau, et cela pour chaque valeur $\theta = \theta_j$.

3. Appareil selon la revendication 1, caractérisé en ce que le balayage de la caméra s'effectue parallèlement à l'axe de rotation du système de projection et les moyens d'analyse notent pour chaque valeur $\theta_j$ l'ordonnée yi de la première ligne de balayage éclairée et l'abscisse xi du premier point éclairé de l'image de la trace, et cela par rapport à un référentiel plan notamment horizontal.

4. Appareil selon la revendication 2 ou 3, caractérisé en ce que le plan xy contient l'axe du système optique avec comme origine sur l'axe y l'image du bord de la zone explorée.

5. Appareil selon la revendication 2, 3 ou 4, caractérisé en ce que les moyens de traitement calculent à partir des valeurs $\theta_j$ transmises par le codeur angulaire, la cote ($z_i$) des points ($x_i$, $y_i$).

6. Appareil selon l'une quelconque des revendications 1 à 5, caractérisé en ce qu'il comporte deux systèmes de projection disposés symétriquement par rapport au vrac et comportant chacun son moteur d'entraînement et son codeur angulaire reliés tout deux à l'interface.

7. Appareil selon l'une des revendications 4 ou 5, caractérisé en ce que les valeurs des coordonnées ($x_i$, $y_i$, $z_i$) des points sélectionnés commandent le terminal de préhension d'un robot.

8. Procédé de localisation d'objets tridimensionnels en vrac pour la commande d'un terminal de préhension à l'aide d'un équipement comprenant au moins un système optique délivrant un faisceau lumineux sensiblement plan et relié à des moyens d'entraînement commandés par une interface connectée à une unité centrale, un capteur de lumière telle une caméra de télévision disposée à l'aplomb de la surface, par exemple horizontale, recevant le vrac et reliée à des moyens d'analyse et de traitement de l'unité centrale, procédé caractérisé en ce qu'il consiste à faire délivrer par le système optique un faisceau faisant un angle $\theta$ avec ladite surface, à entraîner en rotation ledit système de manière à faire varier l'angle $\theta$ dans un interval ($\theta_1$, $\theta_N$) pour balayer la surface du vrac, à analyser pour chaque valeur de l'angle $\theta$ la trace lumineuse du faisceau captée par la caméra à sélectionner par les moyens de traitement le ou les points du vrac dont la cote répond à une condition préétablie.

9. Procédé selon la revendication 8, caractérisé en ce qu'il consiste pour effectuer la sélection à élaborer, par rapport à un référentiel, les coordonnées cartésiennes ($x$, $y$, $z$) des points de la surface du vrac à partir des valeurs angulaires $\theta_j$ et des coordonnées ($x_i$, $y_i$) des points intersection avec les lignes balayage et de l'image de la trace lumineuse captée par la caméra.

10. Procédé selon la revendication 8 ou 9, caractérisé en ce qu'il consiste à sélectionner à l'aide de moyens de traitement les points du vrac compris dans une zone déterminée notamment entre deux cotes données.

11. Procédé selon la revendication 8, caractérisé en ce qu'il consiste à élaborer, par rapport à un référentiel, les coordonnées cartésiennes $(x_i, y_i, z_i)$ des points de la surface du vrac à partir des valeurs angulaires $\theta_j$ des coordonnées $(x_i, y_i)$ du point intersection de la ligne de balayage et du premier point éclairé de l'image de la trace lumineuse captée par la caméra.

12. Procédé selon la revendication 11, caractérisé en ce qu'il consiste à sélectionner à l'aide des moyens de traitement le point le plus haut de la surface du vrac.

FIG.1

FIG.2

FIG.7

FIG.3

Avec mire dans champ caméra, déterminer relation entre les coordonnées des points de la scène et les coordonnées x, y mesurées par la caméra.

Avec vrac remplacé par un plan horizontal de cote Ho

La trace est-elle en limite gauche de l'image TV ?

non

augmenter $\theta$

oui

Noter $\theta_1$

Noter $y_j$ coordonnée de la trace lumineuse et $\theta_j$

Diminuer $\theta$

La trace est-elle en limite droite de l'image TV ?

non

Noter $\theta_N$

**FIG.4**

Calcul par moindres carrés du paramètre "a" de la relation
$$H_o = - (y_j + a) \cdot \text{tg} \, \theta_j$$

0059121

```
┌─────────────────────────────┐
│ Démarrage rotation à partir │
│   θ₁    (j = o)             │
│ Initialiser P = 0           │
└─────────────────────────────┘
            │
     ┌──────────────┐
     │  j = j + 1   │
     └──────────────┘
            │
   ┌────────────────────┐
   │ Positionnement moteur │
   │ sur  θⱼ             │
   └────────────────────┘
            │
   ┌────────────────────┐
   │ Lancement analyse TV │
   │ sur ligne i = 1     │
   └────────────────────┘
```

Démarrage rotation à partir $\theta_1$ (j = o) Initialiser P = 0

j = j + 1

Positionnement moteur sur $\theta_j$

Lancement analyse TV sur ligne i = 1

non  —  i ≤ 250 ?  —  oui

non  —  Lumière sur la ligne i ?  —  oui

Relevés du triplet ($x_i$ $y_i$ $\theta_j$) de la ligne i. Incrémentation compteur P

i = i + 1

Relevé $\theta_j$

$\theta_j = \theta_N$ ?  —  non

oui

Retour Position $\theta_1$

Calcul des $z_k$
$z_k = -(y_i + a) \, tg \, \theta_j$

Recherche $z_k$ Max = H

F I N

F I N

**FIG.5**

k = 1

non  —  $H - h \leq z_k < H$ ?  —  oui

Transmettre $x_k$, $y_k$, $z_k$,

k + 1

non  —  k ≤ P ?  —  oui

0059121

```
┌─────────────────────────┐
│ Démarrage rotation à     │
│ partir de  Θ₁ (j = o)   │
└─────────────────────────┘
            │
            ▼
      ┌───────────┐
      │ j = j + l │
      └───────────┘
            │
            ▼
   ┌──────────────────────┐
   │ Positionnement moteur sur │
   │         Θ j          │
   └──────────────────────┘
            │
            ▼
   ┌──────────────────────┐
   │ Lancement analyse T V │
   │    sur ligne i = l    │
   └──────────────────────┘
            │
            ▼
   non ◄──◇ i ≤ 250 ◇
         ◇    ?    ◇
            │ oui
            ▼
   non ◄──◇ Lumière ◇
         ◇ sur la ligne i ◇
         ◇     ?     ◇
            │ oui
            ▼
   ┌──────────────────────────┐
   │ Relevé xᵢ, yᵢ, calcul    │
   │ de zᵢ= -(yᵢ+a).tg Θⱼ    │
   └──────────────────────────┘
            │
            ▼
   non ◄──◇ zᵢ > H ◇
         ◇   ?    ◇
            │ oui
            ▼
   ┌──────────────────────┐
   │    Mise en mémoire    │
   │ X=xᵢ   Y=yᵢ   H= zᵢ  │
   └──────────────────────┘
```

$z_i = -(y_i + a) . \mathrm{tg}\, \Theta_j$

Relevé $\Theta_j$

$i + 1$

Mise en mémoire  $X = x_i$   $Y = y_i$   $H = z_i$

$\Theta_j = \Theta_N$  ?   non

Retour $\Theta = \Theta_1$

Prise au point X, Y, H

Fin

Fin

**FIG.6**

Office européen **RAPPORT DE RECHERCHE EUROPEENNE**
des brevets

Numéro de la demande

EP 82 40 0154

## DOCUMENTS CONSIDERES COMME PERTINENTS

| Catégorie | Citation du document avec indication, en cas de besoin, des parties pertinentes | Revendication concernée |
|---|---|---|
| XY | ENGINEERING, vol. 220, no. 5, mai 1980 Londres (GB) A.F. THOMAS et al.: "Robot vision", pages 533-537 <br><br> * Page 534, colonne 1, lignes 47-66; page 535, colonne 2, lignes 8-22; page 535, colonne 2, ligne 31 - page 535, colonne 3, ligne 24; page 536, colonne 1, lignes 28-48; figures 2-4 * | 1-9,11 |
| Y | COMPUTERIZED ROBOTS, THE STATE OF THE ART, September 1980, Society of Manufacturing Engineers Santa Monica (US) G.J. VANDERBRUG et al.: "A vision system for real-time robot control", pages 2-21-1 - 2-21-4 <br><br> * Page 2-21-3, colonne 2, ligne 18 - page 2-21-3, colonne 3, ligne 4; figure 2 * | 2,4-7, 11 |
| Y | PATTERN RECOGNITION, vol. 8, no. 4, octobre 1976 Pergamon Press (GB) M. ISHII et al.: "Feature extraction of threedimensional objects and visual processing in a hand-eye system using laser tracker", pages 229-237 <br><br> * Page 229, colonne 1, lignes 1-24; page 229, colonne 2, ligne 23 - page 230, colonne 1, ligne 10; page 230, colonne 2, lignes 1-32; figure 3 * | 4-7,11 |

./.

**CLASSEMENT DE LA DEMANDE (Int. Cl. 3)**

G 06 F 15/62

**DOMAINES TECHNIQUES RECHERCHES (Int. Cl. 3)**

B 25 J 19/00
G 06 F 16/62
16/70
G 06 K 9/00
9/20
9/26
9/78

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| La Haye | 18-05-1982 | HARMS |

OEB Form 1503.1 06.78

Office européen
des brevets

**RAPPORT DE RECHERCHE EUROPEENNE**

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| Y | US - A - 4 115 806 (MORTON)<br><br>* Colonne 4, ligne 43 - colonne 5, ligne 10; colonne 12, ligne 36 - colonne 13, ligne 54; figures 1D, 3A, 3B * | 2-7, 9,11 | |
| A | FR - A - 2 315 683 (SOFERMO)<br><br>* Page 1, ligne 1 - page 2, ligne 13; figure 1 * | 1,8 | **DOMAINES TECHNIQUES RECHERCHES (Int. Cl.³)** |